(19) Europäisches Patentamt
European Patent Office
Office européen des brevets

(11) Veröffentlichungsnummer : **0 061 105**
**B1**

(12) # EUROPÄISCHE PATENTSCHRIFT

(45) Veröffentlichungstag der Patentschrift : **26.09.84**

(51) Int. Cl.³ : **C 09 J 3/14**, C 08 F 20/28

(21) Anmeldenummer : **82102039.3**

(22) Anmeldetag : **13.03.82**

(54) **Klebstoffe und Dichtungsmassen.**

(30) Priorität : **21.03.81 DE 3111132**

(43) Veröffentlichungstag der Anmeldung : **29.09.82 Patentblatt 82/39**

(45) Bekanntmachung des Hinweises auf die Patenterteilung : **26.09.84 Patentblatt 84/39**

(84) Benannte Vertragsstaaten : **AT BE CH DE FR GB IT LI NL SE**

(56) Entgegenhaltungen : **US-A- 2 398 926**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Gruber, Werner, Dr.**
**Franz-Kremer-Strasse 7**
**D-4052 Korschenbroich (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung bezieht sich auf lagerstabile, bei Ausschluß von Sauerstoff beschleunigt erhärtende von Peroxiden und Hydroperoxiden freie Systeme auf Basis von Estern der Methacrylsäure und/oder Acrylsäure, die sich zur Verbindung und Abdichtung, insbesondere metallischer Flächen eignen.

Es ist ein Verfahren zur Herstellung von lagerbeständigen Klebstoffen auf Basis von Methacrylsäureestern bekannt, bei dem der monomere Ester in Gegenwart eines Inhibitors zusammen mit einem Chelatbildner sowie Benzoesäuresulfimid und einem tertiären Amin so lange erhitzt wird, bis der Gehalt an aktivem Sauerstoff mindestens 25 ppm beträgt. Zwar ist es nicht erforderlich, das Verfahren mit konstantem Durchleiten von gasförmigem Sauerstoff durch den Klebstoff während dessen Herstellung durchzuführen, aber es sind doch verhältnismäßig lange Zeiträume erforderlich, um brauchbare Mischungen zu erhalten. Es ist weiter möglich, anaerob härtende Mischungen auf Basis von Methacrylsäureestern unter Verwendung von α-Aminosulfonen herzustellen, doch führt hier nur der Zusatz von Dialkylperoxiden zu technisch brauchbaren Mischungen.

Aufgabe der vorliegenden Erfindung war es daher, solche lagerstabilen Mischungen auf Basis von (Meth) acrylsäureestern zu finden, die unter anaeroben Bedingungen rasch aushärten und keine Peroxide enthalten. Auch sollen sie durch einfaches Mischen der Bestandteile sofort gebrauchsfertige Klebstoffe und Dichtungsmittel ergeben.

Die erfindungsgemäßen Systeme sind nun gekennzeichnet durch einen Gehalt an

a) 0,2 bis 5 Gewichtsteilen organischer Aminoxide und
b) 0,2 bis 10 Gewichtsteilen mindestens einer HN-aciden Verbindung

bezogen auf 100 Gewichtsteile des polymerisierbaren Materials.

Nach einer bevorzugten Ausführungsform enthalten die Aminoxide wenigstens einmal die Gruppierung

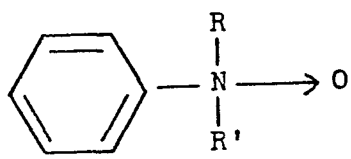

wobei der aromatische Rest auch noch substituiert sein kann, und R beziehungsweise R′ einen Alkylrest mit 1 bis 12 Kohlenstoffatomen bedeutet.

Unter den Aminoxiden ist aus praktischen Erwägungen das des N,N-Dimethylanilins, N,N-Dimethyltoluidins, Chlor-N,N-dimethylanilins sowie des N,N-Dimethylnaphthylamins bevorzugt. Brauchbar sind aber auch die Aminoxide des N,N,N′,N′-Tetramethylphenylendiamins und ähnlich aufgebauter Verbindungen.

Die Aminoxide können gegebenenfalls auch in Form ihrer Salze, zum Beispiel mit Carbonsäuren wie Essigsäure, Ameisensäure, Oxalsäure, Weinsäure oder dergleichen eingesetzt werden.

Nach einer weiteren vorteilhaften Ausführungsform enthalten die erfindungsgemäßen anaeroben Systeme noch Sulfonsäure- und/oder Carbonsäurehydrazide und/oder Sulfimide und/oder Acylcyanamide und/oder Disulfonylimide als HN-acide Verbindungen.

Geeignete Sulfonsäurehydrazide leiten sich beispielsweise von Benzolsulfonsäure, o- und p-Toluolsulfonsäure, α- und β-Naphthalinsulfonsäure, p-Chlorbenzolsulfonsäure, p-Brombenzolsulfonsäure und dergleichen mehr ab. Auch die Hydrazide von Cyclohexylsulfonsäuren, Camphersulfonsäure, Hexadecansulfonsäure können eingesetzt werden.

Ferner können die Sulfonsäurehydrazide am Stickstoff substituiert sein, beispielsweise durch Alkylgruppen, Cycloalkylgruppen oder durch aromatische Reste wie dem Phenylrest. Beispiele für geeignete Sulfonsäurehydrazide sind :

N,N-Dimethyl-N′-benzolsulfonsäurehydrazid,
N-Methyl-N′-benzolsulfonsäurehydrazid,
N-Methyl-N′-p-toluolsulfonsäurehydrazid,
N,N-Dimethyl-N′-p-toluolsulfonsäurehydrazid,
N-Isopropyl-N′-p-toluolsulfonsäurehydrazid,
N-Cyclohexyl-N′-p-toluolsulfonsäurehydrazid,
N,N-Di-n-butyl-N′-p-toluolsulfonsäurehydrazid,
N-n-Hexyl-N′-p-chlorbenzolsulfonsäurehydrazid,
N,N-Diethyl-N′-p-chlorbenzolsulfonsäurehydrazid.

Als Carbonsäurehydrazide kommen solche in Frage, die sich ableiten von Carbonsäuren wie etwa Essigsäure, Propionsäure, Benzoesäure, Cyclohexancarbonsäure, Cyclohexandicarbonsäure, Bernsteinsäure, Sebacinsäure. Mit gutem Erfolg lassen sich auch die Carbazide sowohl des Ethylesters als auch des tert.-Butylesters der Kohlensäure verwenden.

Unter den Sulfimiden ist das Benzoesäuresulfimid am wirksamsten.

Die einsetzbaren Disulfonylimide entsprechen der allgemeinen Formel

$$R—SO_2—NH—SO_2—R'$$

wobei R und R' für einen Alkyl-, Cycloalkyl- oder einen Arylrest stehen.

Geeignete Disulfonylamide leiten sich beispielsweise ab von Benzolsulfonsäure, p-Chlorbenzolsulfonsäure, Dichlorbenzolsulfonsäure, Toluolsulfonsäure, den isomeren Xylolmonosulfonsäuren, α- oder β-Naphthalinsulfonsäure, Methoxy- oder Propoxybenzolsulfonsäuren, Diphenylsulfonsäure, Cumolsulfonsäure.

Als Acylcyanamide sind alle Verbindungen brauchbar, sofern sie in den Monomeren in hinreichender Menge löslich sind. Es kommen die folgenden Acylcyanamide in Betracht : Acetylcyanamid, Propionylcyanamid, n-Butyrylcyanamid, iso-Butyrylcyanamid, Lauroylcyanamid, Myristoylcyanamid, Stearoylcyanamid, Benzoylcyanamid, Naphtholoylcyanamid, Toluylcyanamid, Acylgruppen können auch sein die Nicotinylgruppe, Phenylacetylgruppe, Dichlorphenylacetylgruppe, Brom- oder Chloracetylgruppe, p-Methylphenylacetylgruppe, p-Nitrophenylpropionylgruppe und 4-Chlor-(brom)-butionylgruppe.

Fakultativ kann zusätzlich ein organisches Amin als Hilfsbeschleuniger zusammen mit den erfindungsgemäßen Beschleunigern verwendet werden. Als Hilfsbeschleuniger seien isomere N,N-Dimethyltoluidine und Tri-n-butylamin erwähnt. Sie sollen nur in sehr kleinen Mengen von 0,1 oder bis zu 2,5 Gewichtsprozent verwendet werden.

Die erfindungsgemäß einzusetzenden Wirkstoffe lassen sich prinzipiell in allen Monomeren einsetzen, die für die Herstellung sogenannter anaerob härtender Klebstoffe und Dichtungsmassen geeignet sind.

Als Basis für derartige Systeme sind geeignet (Meth)-acrylsäureester von ein- und mehrwertigen Alkoholen wie Methanol, Ethanol, Hexanol, Decanol, Ethylenglykol, Diethylenglykol, Triethylenglykol, Tetraethylenglykol, Polyethylenglykol, Glycerin, Pentandiol, Di-, Tri- oder Tetrapropylenglykol oder auch (Meth)-acrylsäureester von dimerisiertem oder polymerisiertem Cyclopentadien oder von Tetrahydrofurfurylalkohol oder Furfurylalkohol. Auch sind noch freie Hydroxylgruppen enthaltende (Meth)-acrylsäureester brauchbar wie Hydroxyethylmethacryl- oder Glycerin-mono- oder -dimethacrylsäureester.

Als Monomere sind weiterhin geeignet die Dimethacrylsäureester des Bis-(ethylenglykol) adipats oder des Maleats oder des Phthalats. Auch die Dimethacrylsäureester des Bis-(diethylenglykol)maleats des Bis-(tetraethylenglykol)-phthalats oder des Bis-(triethylenglykol)sebazats sind geeignete Monomere.

Eine geeignete Basis stellen weiterhin die Umsetzungsprodukte von Diisocyanaten mit Hydroxyalkylmethacrylaten oder Aminoalkylmethacrylaten dar. Dabei handelt es sich um niedermolekulare Polyurethane und Polyharnstoffe mit endständigen Methacrylsäureestergruppierungen. Der Alkylrest kann zwischen etwa 2 und 18 Kohlenstoffatome aufweisen und auch cyclisch sein, wie etwa der Cyclohexylrest. Auch ist es möglich, anstelle des Alkylrestes einen aromatischen Rest zu haben. Erwähnenswert sind in diesem Zusammenhang die Reaktionsprodukte aus aromatischen Isocyanaten wie dem Toluylendiisocyanat, dem Diphenylmethandiisocyanat oder auch dem Isophorondiisocyanat mit Hydroxyethylmethacrylsäureester oder Hydroxypropylmethacrylsäureester.

Eine geeignete Basis für die bei Ausschluß von Sauerstoff beschleunigt erhärtenden Systeme gemäß der Erfindung sind auch die Methacrylate oder Acrylate, die sich durch Umsetzung von Methacrylsäure beziehungsweise Acrylsäure oder deren Estern mit Diphenylolpropan ableiten. Auch können derartige Umsetzungsprodukte von anderen bifunktionellen Phenolen verwendet werden. In vielen Fällen werden die genannten Phenole vor der Umsetzung mit Methacrylsäure beziehungsweise Acrylsäure mit 2 bis 10 Mol Ethylenoxid beziehungsweise Propylenoxid zur Reaktion gebracht.

Ferner sind eine brauchbare Basis für die erfindungsgemäßen Systeme die Dimethacrylsäureester von Halbestern aus Diolen und Carbonsäureanhydriden mit Glycidylmethacrylat. Zur Herstellung dieser Verbindungen setzt man zunächst Diole wie Ethylenglykol, Diethylenglykol, Propylenglykol, Butandiol-1,4, Hexandiol-1,6 oder Oxystearylalkohol mit den Anhydriden von Carbonsäuren wie Bernsteinsäureanhydrid, Maleinsäureanhydrid oder Phthalsäureanhydrid zu den Halbestern um. Die noch freien Carboxylgruppen werden dann mit Glycidylmethacrylat in die Methacrylsäureester überführt.

Schließlich sind erwähnenswert die Dimethacrylsäureester, welche sich ableiten vom Bis-(hydroxymethyl) tricyclodecan.

Selbstverständlich werden diese Monomeren im allgemeinen nicht allein eingesetzt, sondern Mischungen von ihnen, um optimale Festigkeitswerte und Härtungszeiten zu erhalten. In der Praxis hat sich ein Abmischen mit Hydroxyalkylmethacrylsäureester bewährt.

Den erfindungsgemäßen Klebstoffen und Dichtungsmassen können auch Verdickungsmittel, Weichmacher, anorganische Füllstoffe und Farbstoffe zugesetzt werden. Als Verdickungsmittel sind geeignet polymere Verbindungen, wie etwa Polymethylmethacrylat, Polyethylacrylat, Polystyrol, Polyvinylchlorid, synthetischer Kautschuk und dergleichen. Als Füllstoffe eignen sich beispielsweise feinverteiltes Siliciumdioxid, Silikate, Bentonite, Calciumcarbonat, Titandioxid.

Die neuen Systeme können in der Technik Anwendung zum Verkleben von Blechen beziehungsweise Teilen aus verschiedensten Legierungen, reinen Metallen oder vorbehandelten metallischen Werkstoffen zur Befestigung von Gewinden und zum Abdichten von Rohrverbindungen finden. Selbstverständlich ist

es möglich, auch mit bekannten Hilfsmitteln, beispielsweise durch geringes Erwärmen, die Aushärtung zu beschleunigen.

Die neuen anaerob härtenden Klebstoffe werden untersucht auf :

A) Handfestigkeit
B) Festigkeit nach 60 Minuten und 24 Stunden
C) Stabilität

A) Handfestigkeitsprüfung

Bei der Handfestigkeitsprüfung werden mehrere Tropfen der anaerob härtenden Masse auf die Gewindegänge einer entfetteten Messingschraube (M 10 × 30 DIN 933) aufgebracht und anschließend mit der dazugehörenden Mutter zusammengebracht. Von Zeit zu Zeit wird die Mutter etwas gegen die Schraube gedreht, um festzustellen, von welcher Zeit an die Mutter sich nicht mehr ohne besondere Kraftanstrengung von Hand auf der Schraube drehen läßt. Die bis dahin verstrichene Zeitspanne wird als Maß für die Handfestigkeit angesehen.

B) Festigkeit nach 60 Minuten und 24 Stunden

An verklebten Eisenschrauben und Muttern wurde nach 60-minütiger und 24-stündiger Lagerung bei Raumtemperatur mittels eines Drehmomentschlüssels die Drehkraft im Nm bestimmt, die zum Aufdrehen der Klebung benötigt wird.

C) Stabilität

Bei der Stabilitätsprüfung wurde ein 10 cm langes und 10 mm weites Reagenzglas zu 9/10 mit den Mischungen gefüllt und in ein auf 80 °C gehaltenes Bad eingehängt. Die Zeitspanne vom Einhängen bis zur ersten Gelbildung wurde gemessen. Sie lag in allen Fällen über 1 Stunde und entspricht erfahrungsgemäß einer Lagerfähigkeit von mehr als 1 Jahr bei Zimmertemperatur.

Beispiel 1 bis 5

Auf jeweils 100 Gewichtsteile Triethylenglykoldimethacrylat wurden die in der nachfolgenden Tabelle 1 aufgeführten Zusätze gegeben. Die Zahlen bedeuten Gewichtsteile.

Tabelle 1

| Zusatz | Nummer der Beispiele 1 | 2 | 3 | 4 | 5 |
|---|---|---|---|---|---|
| p-Toluolsulfonsäurehydrazid | 1 | - | - | 1 | 0,5 |
| Benzoesäuresulfimid | 1 | 1 | - | - | 0,5 |
| Benzoylcyanamid | - | - | 1 | 1 | - |
| N,N-Dimethyl-p-toluidin-N-oxid | 1 | 1 | 1 | 1 | 0,5 |

In der nachfolgenden Tabelle 2 ist die Handfestigkeit in Minuten, die gefundene Festigkeit nach 60 Minuten und 24 Stunden in Abhängigkeit von der laufenden Nummer des Beispiels wiedergegeben.

Tabelle 2

| Beispiel | 1 | 2 | 3 | 4 | 5 |
|---|---|---|---|---|---|
| Aushärtezeit | | | | | |
| Handfestigkeit (min) | 2 | 5 | 3 | 2 | 3 |
| 1 Stunde (Nm) | 40 | 32 | 10 | 30 | 30 |
| 24 Stunden (Nm) | 50 | 45 | 46 | 45 | 48 |

Beispiele 6 bis 9

In der nachfolgenden Tabelle 3 ist die Zusammensetzung von verschiedenen erfindungsgemäßen Mischungen wiedergegeben. Die Zahlen in Abhängigkeit von den Nummern des Beispiels sind Gewichtsteile.

Tabelle 3

| Nummer der Beispiele | 6 | 7 | 8 | 9 |
|---|---|---|---|---|
| Triethylenglykoldimethacrylat | 97,5 | 98 | 99 | 98,0 |
| p-Toluolsulfonsäurehydrazid | 1 | 0,5 | - | 1 |
| Benzoesäuresulfimid | 0,5 | 0,5 | 0,5 | 0,5 |
| N,N-Dimethyl-p-toluidin-N-oxid | 1 | 1 | 0,5 | 0,5 |

In der nachfolgenden Tabelle 4 sind wieder in Abhängigkeit von der Nummer des Beispiels die Aushärtezeit in Minuten bis zum Erreichen der Handfestigkeit und die nach 1 und 24 Stunden gefundenen Drehmomente wiedergegeben.

Tabelle 4

| Nummer der Beispiele | 6 | 7 | 8 | 9 |
|---|---|---|---|---|
| Aushärtezeit (min) | 3 | 5 | 10 | 3 |
| 1 Stunde (Nm) | 40 | 30 | 30 | 35 |
| 24 Stunden (Nm) | 55 | 45 | 45 | 50 |

Beispiele 10 bis 13

In der nachfolgenden Tabelle 5 ist die Zusammensetzung von erfindungsgemäßen Mischungen wiedergegeben, wobei die Zahlen in Abhängigkeit von den Nummern der Beispiele Gewichtsteile bedeuten.

| Nummer der Beispiele | 10 | 11 | 12 | 13 |
|---|---|---|---|---|
| Dimethacrylat eines propoxylierten Diphenylolpropans | 48 | 30 | 48 | 60 |
| Hydroxyethylmethacrylat | 48 | 68 | - | - |
| Triethylenglykoldimethacrylat | - | - | 48 | 38 |
| p-Toluolsulfonsäurehydrazid | 1 | 0,5 | 1 | 0,5 |
| Benzoesäuresulfimid | 1 | 0,5 | 1 | 0,5 |
| N,N-Dimethyl-p-toluidin | 1 | 0,5 | 1 | 0,5 |

In der nachfolgenden Tabelle 6 sind in Abhängigkeit von den Nummern der Beispiele die Aushärtezeit bis zum Erreichen der Handfestigkeit und die nach 1 beziehungsweise 24 Stunden gefundenen Drehmomente wiedergegeben.

Tabelle 6

| Nummer der Beispiele | 10 | 11 | 12 | 13 |
|---|---|---|---|---|
| Aushärtezeit (min) | 5 | 5 | 3 | 3 |
| 1 Stunde (Nm) | 40 | 30 | 41 | 32 |
| 24 Stunden (Nm) | 58 | 50 | 52 | 45 |

Beispiele 14 bis 17

In der nachfolgenden Tabelle 7 ist die Zusammensetzung von erfindungsgemäßen Mischungen wiedergegeben, wobei die Zahlen in Abhängigkeit von den Nummern der Beispiele Gewichtsteile bedeuten.

Tabelle 7

| Nummer der Beispiele | 14 | 15 | 16 | 17 |
|---|---|---|---|---|
| Dimethacrylat des Dimethylol-tricyclodecans | 50 | 50 | - | - |
| Diurethan aus 1 Mol Diphenylmethandiisocyanat und 2 Mol Hydroxyethylmethacrylat | - | - | 50 | 50 |
| Hydroxyethylmethacrylat | 47 | - | 48 | - |
| Triethylenglykoldimethacrylat | - | 48 | - | 47 |
| p-Toluolsulfonsäurehydrazid | 1 | - | - | 1 |
| Benzoesäuresulfimid | 1 | 1 | 1 | 1 |
| N,N-Dimethyl-p-toluidin-N-oxid | 1 | 1 | 1 | 1 |

In der nachfolgenden Tabelle 8 sind in Abhängigkeit von den Nummern der Beispiele die Aushärtezeit bis zum Erreichen der Handfestigkeit und die nach 1 beziehungsweise 24 Stunden gefundenen Drehmomente wiedergegeben.

Tabelle 8

| Nummer der Beispiele | 14 | 15 | 16 | 17 |
|---|---|---|---|---|
| Aushärtezeit (min) | 5 | 10 | 3 | 5 |
| 1 Stunde (Nm) | 30 | 20 | 25 | 35 |
| 24 Stunden (Nm) | 52 | 45 | 50 | 58 |

**Ansprüche**

1. Lagerstabile, bei Ausschluß von Sauerstoff beschleunigt erhärtende von Peroxiden und Hydroperoxiden freie Systeme auf Basis von Estern der Methacrylsäure und Acrylsäure, gekennzeichnet durch einen Gehalt an

a) 0,2 bis 5 Gewichtsteilen organischer Aminoxide und
b) 0,2 bis 10 Gewichtsteilen wenigstens einer HN-aciden Verbindung

jeweils bezogen auf 100 Gewichtsteile polymerisierbaren Materials.

2. Lagerstabile, beschleunigt erhärtende Systeme nach Anspruch 1, dadurch gekennzeichnet, daß die Aminoxide wenigstens einmal die Gruppierung

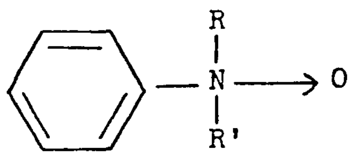

enthalten, wobei der aromatische Rest auch noch substituiert sein kann, und R beziehungsweise R′ einen Alkylrest mit 1 bis 12 Kohlenstoffatomen bedeutet.

3. Lagerstabile, beschleunigt erhärtende Systeme nach Ansprüchen 1 bis 2, gekennzeichnet durch einen Gehalt an Sulfonsäurehydraziden und/oder Carbonsäurehydraziden und/oder Sulfimiden und/oder Disulfonylimiden und/oder Acylcyanamiden als HN-acide Verbindungen.

**Claims**

1. Storable, peroxide- and hydroperoxide-free systems based on esters of methacrylic acid and acrylic acid of which the hardening is accelerated in the absence of oxygen, characterized by a content of

a) from 0.2 to 5 parts by weight of organic amine oxides and
b) from 0.2 to 10 parts by weight of at least one HN-acid compound,

based in each case on 100 parts by weight of polymerizable material.

2. Storable quick-hardening systems as claimed in Claim 1, characterized in that the amine oxides contain the group

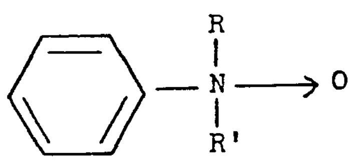

at least once ; in that group, the aromatic radical may even be substituted and R and R′ represent a $C_{1-12}$ alkyl radical.

3. Storable, quick-hardening systems as claimed in Claims 1 and 2, characterized by a content of sulfonic acid hydrazides and/or carboxylic acid hydrazides and/or sulfimides and/or disulfonyl imides and/or acyl cyanamides as HN-acid compounds

**Revendications**

1. Systèmes stables à la conservation, à durcissement accéléré en l'absence d'oxygène, exempts de peroxydes et d'hydroperoxydes, à base d'esters de l'acide méthacrylique et de l'acide acrylique, caractérisés en ce qu'ils contiennent

a) 0,2 à 5 parties en poids d'oxydes d'amines organiques, et
b) 0,2 à 10 parties en poids d'au moins un composé à NH acide,

dans les deux cas pour 100 parties en poids de matière polymérisable.

2. Systèmes stables à la conservation, à durcissement accéléré selon la revendication 1, caractérisés en ce que les oxydes d'amines contiennent au moins une fois le groupement

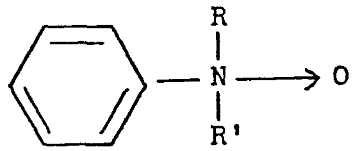

dans lequel le reste aromatique peut encore être substitué, et R et R' représentent chacun un groupe alkyle en $C_1$-$C_{12}$.

3. Systèmes stables à la conservation, à durcissement accéléré, selon les revendications 1 et 2, caractérisés en ce qu'ils contiennent des hydrazides d'acides sulfoniques et/ou des hydrazides d'acides carboxyliques et/ou des sulfimides et/ou des disulfonylimides et/ou des acylcyanamides en tant que composés à NH acide.